# EUROPEAN PATENT APPLICATION

(11) **EP 2 986 013 A1**
(43) Date of publication of application: **17.02.2016**
(21) Application number: 15180238.6
(22) Date of filing: 07.08.2015
(51) Int. Cl.: H04N 21/41, H04H 20/08, H04H 60/80, H04N 21/442, H04N 21/462, H04N 21/4722, H04N 21/431

(54) **USER TERMINAL APPARATUS, DISPLAY APPARATUS, SYSTEM AND CONTROL METHOD THEREOF**

(30) Priority: 12.08.2014 KR 20140104314
(71) Applicant: Samsung Electronics Co., Ltd., Suwon-si, Gyeonggi-do (KR)
(72) Inventor: CHO, Young-hoon, Gyeonggi-do (KR); HA, Tae-hyeun, Gyeonggi-do (KR); KIM, Tae-hoon, Gyeonggi-do (KR); HYEON, Byeong-cheol, Gyeonggi-do (KR)
(74) Representative: Walaski, Jan Filip

(57) **Abstract**

A user terminal apparatus including: a display; a communicator configured to communicate with a display apparatus; a state determiner configured to determine an arrangement state of the user terminal apparatus; and a controller configured to control, in response to the user terminal apparatus being changed to a predetermined arrangement state, the communicator to transmit information on the arrangement state to the display apparatus and receive information related to content currently displayed on the display apparatus, to divide a screen of the display into a plurality of display regions, and to control the display to display the received information on at least one of the plurality of display regions.

## Description

The present invention relates to a user terminal apparatus, display apparatus, system and control method thereof, and more particularly, to a user terminal apparatus wherein a screen mode may be changed automatically according to an arrangement state, and a display apparatus, system and control method thereof.

With the development of communication technologies and increasing user demands, recent display apparatuses have become capable of providing various additional services related to a displayed content. However, in order for a user to utilize the additional services while viewing the content, the user must divide or convert a screen. A user's convenience for obtaining related information may be improved by dividing a screen on a display apparatus and displaying a content currently being displayed and information related to the content at the same time.

However, a display apparatus usually has a long rectangular shape wherein a width is longer than a length so that a more lifelike image may be provided. Therefore, in the case of dividing a display apparatus having a wider width to provide a plurality of content, problems may occur where the screen ratio of the image is distorted thereby deteriorating the quality of the image. Furthermore, in the case where there are a plurality of views, a problem may occur where a user may not be able to view the image from the view from which they had been viewing smoothly and continuously.

Therefore, there is a need for a method to provide various services related to an image to users while displaying the image that the users had been viewing on the current display apparatus.

Therefore, a purpose of various exemplary embodiments is to resolve the aforementioned problems, that is to provide a user terminal apparatus wherein an arrangement state of the user terminal apparatus may be changed so that a content being displayed on the current display apparatus and information on the content may be displayed to the user, and a display apparatus, system and control method thereof. However, one or more exemplary embodiments may not resolve all of the aforementioned problems, and an exemplary embodiment may not resolve any of the aforementioned problems.

According to an aspect of an exemplary embodiment, there is provided a user terminal apparatus including: a display; a communicator configured to communicate with a display apparatus; a state determiner configured to determine an arrangement state of the user terminal apparatus; and a controller configured to control, in response to the user terminal apparatus being changed to a predetermined arrangement state, the communicator to transmit information on the arrangement state to the display apparatus and receive information related to content currently displayed on the display apparatus, to divide a screen of the display into a plurality of display regions, and to control the display to display the received information on at least one of the plurality of display regions.

The controller may be further configured to, in response to the user terminal apparatus being changed from a landscape screen state to a portrait screen state, control the communicator to transmit the information on the arrangement state to the display apparatus.

The controller may be further configured to, in response to the user terminal apparatus being changed to a predetermined arrangement state while the content currently displayed on the display apparatus is being mirrored on the display, control the communicator to transmit the information on the arrangement state to the display apparatus.

The information related to the content may be received from the display apparatus includes at least one of image content of a channel surrounding a channel of the content currently displayed on the display apparatus, image content of content having a same genre as the content currently displayed on the display apparatus, additional information content related to the content currently displayed on the display apparatus, and multi-view image content of the content currently displayed on the display apparatus.

The controller may be further configured to, in response to one of the plurality of display regions displaying the received information being selected, control the display to display the selected information on an entire screen of the display.

The state determiner may be further configured to determine the arrangement state using at least one of an acceleration sensor, a gyro sensor, and a touch sensor.

The user terminal apparatus may further include a content receiver.

The controller may be further configured to control the content receiver to, in response to the user terminal apparatus being changed from a landscape screen state to a portrait screen state while the user terminal apparatus is mirroring the display apparatus, receive the information related to the content displayed on the display, divide the screen of the display into the plurality of display regions, and control the display to display the received information on at least one of the plurality of display regions.

The controller may be further configured to control the communicator to receive the information related to the content based on information classified by content genre and source stored in the user terminal apparatus or received from an external server.

According to an aspect of another exemplary embodiment, there is provided a display apparatus including: a display configured to display a content on a screen; a communicator configured to communicate with a user terminal apparatus; and a controller configured to, in response to receiving information on an arrangement state of the user terminal apparatus, control the communicator to transmit information related to the content currently displayed on the screen to the user terminal apparatus based on the received information.

The information on the arrangement state may include information indicating that the user terminal apparatus has changed from a landscape screen state to a portrait screen state.

The information related to the content currently displayed may include at least one of image content of a channel surrounding a channel of the content currently displayed on the screen, image content of content having a same genre as the content currently displayed on the screen, additional information content related to the content currently displayed on the screen, and multi-view image content of the content currently displayed on the screen.

The controller may be further configured to control the display to, in response to receiving information indicating that information related to the content currently displayed on the screen has been selected in the user terminal apparatus, display the selected information on an entirety of the screen.

According to an aspect of an exemplary embodiment, there is provided a system including: a display apparatus; and a user terminal apparatus configured to determine an arrangement state of the user terminal apparatus, and, in response to the user terminal apparatus being changed to a predetermined arrangement state, to transmit information on the arrangement state to the display apparatus, wherein the display apparatus is configured to display a content on a screen, and, in response to receiving information on the arrangement state of the user terminal apparatus, to transmit information related to content currently displayed on the screen to the user terminal apparatus based on the received information, and wherein the user terminal apparatus is further configured to, in response to receiving the information related to the content, divide the screen into a plurality of display regions, and display the received information on at least one of the plurality of display regions.

The user terminal apparatus may be further configured to, in response to the user terminal apparatus being changed to the predetermined arrangement state while the content currently displayed on the display apparatus is being mirrored on a screen of the user terminal apparatus, transmit the information on the arrangement state to the display apparatus.

According to an aspect of an exemplary embodiment, there is provided a method for controlling a user terminal apparatus, the method including: determining an arrangement state of the user terminal apparatus; transmitting, in response to determining that the arrangement state of the user terminal apparatus has changed to a predetermined arrangement state, information on the arrangement state to a display apparatus; receiving information related to content currently displayed on the display apparatus; dividing a screen of the terminal apparatus into a plurality of display regions; and displaying the received information on at least one of the plurality of display regions.

The transmitting may include transmitting the information on the changed arrangement state in response to the user terminal apparatus being changed from a landscape screen state to a portrait screen state.

The transmitting may include transmitting the information on the changed arrangement state to the display apparatus in response to the user terminal apparatus being changed to the predetermined arrangement state while the content currently displayed on the display apparatus is being mirrored on the screen.

The information related to the content received from the display apparatus may include at least one of image content of a channel surrounding a channel of the content currently displayed on the display apparatus, image content of content having a same genre as the content currently displayed on the display apparatus, additional information content related to the content currently displayed on the display apparatus, and multi-view image content of the content currently displayed on the display apparatus. determining an arrangement state of the user terminal apparatus; in response to the user terminal apparatus being changed to a predetermined arrangement state, transmitting information on the arrangement state to the display apparatus and receiving information related to the content; and dividing a screen into a plurality of display regions and displaying the received information on at least one of the plurality of display regions.

According to an aspect of an exemplary embodiment, there is provided a method for controlling a display apparatus, the method including: displaying a content on a screen of the display apparatus; receiving information on an arrangement state of the user terminal apparatus from a user terminal apparatus; and transmitting, in response to receiving the information on the arrangement state, information related to content currently displayed on the screen to the user terminal apparatus based on the received information.

The information on the arrangement state may include information indicating that the user terminal apparatus is being changed from a landscape screen state to a portrait screen state. displaying a content on a screen; and in response to information on an arrangement state of a user terminal apparatus being received from the user terminal apparatus, transmitting information related to the content displayed on the screen to the user terminal apparatus based on the received information.

According to an aspect of an exemplary embodiment, there is provided a user terminal apparatus including: a display including a screen; a transceiver configured to transmit information to and receive information from a display apparatus; a sensor configured to sense orientation information; and a controller configured to determine an arrangement state of the user terminal apparatus based on sensed orientation information, control the transceiver to, in response to determining that the arrangement state of the user terminal apparatus has changed to a predetermined arrangement state, transmit information on the arrangement state to a display apparatus, divide, in response to the transceiver receiving information related to content currently displayed on the display apparatus, the screen into a plurality of display regions, and control the display to display images corresponding to the received information on at least one of the plurality of display regions.

The controller may be further configured to control the transceiver to receive the images corresponding to the received information from at least one of a broadcast station and an external server.

The controller may be further configured to mirror the display apparatus by controlling the display to display the content currently displayed on the display apparatus on a whole of the screen in response to determining that the configuration state of the user terminal apparatus is in a first arrangement state, and to display the content currently displayed on the display apparatus on one of the plurality of display regions in response to determining that the configuration state of the user terminal apparatus is the predetermined arrangement state.

The controller may be further configured to control the transceiver to receive the content from at least one of a broadcast station and an external server.

According to an aspect of various exemplary embodiments, it is possible to change an arrangement state of the user terminal apparatus, thereby easily providing content currently being displayed on the display apparatus and related information, and thus user convenience is improved.

The above and/or other aspects of one or more exemplary embodiments will be more apparent by describing certain exemplary embodiments with reference to the accompanying drawings, in which:
FIG. 1 is a view illustrating a display system according to an exemplary embodiment;
FIG. 2 is a block diagram of a user terminal apparatus according to an exemplary embodiment;
FIG. 3 is a view for explaining a region where related information is displayed according to an embodiment;
FIG. 4 is a block diagram of a user terminal apparatus according to an exemplary embodiment;
FIG. 5 is a block diagram of a storage according to an exemplary embodiment;
FIG. 6 is a block diagram of a display apparatus according to an exemplary embodiment;
FIGs. 7A to 7B are views for explaining a pairing method of a display apparatus and user terminal apparatus according to an exemplary embodiment;
FIG. 8 is a view for explaining a method for determining an arrangement state of a user terminal apparatus according to an exemplary embodiment;
FIGs. 9 to 12 are views for explaining information related to content being displayed according to various exemplary embodiments;
FIG. 13 is a view for explaining a process of receiving related information classified by content genre and source;
FIG. 14 is a flowchart of a method for controlling a user terminal apparatus according to an exemplary embodiment; and
FIG. 15 is a flowchart of a method for controlling a display apparatus according to an exemplary embodiment

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

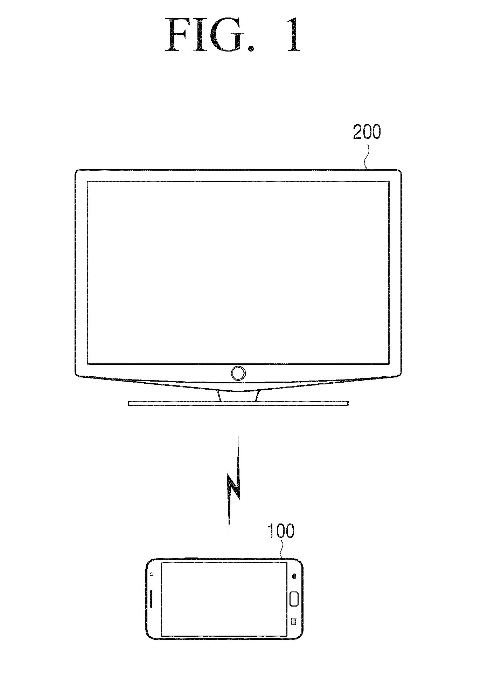

FIG. 1 is a view for explaining a display system according to an exemplary embodiment. Referring to FIG. 1, the display system includes a user terminal apparatus 100 and display apparatus 200.

The display apparatus 200 may be realized as a digital television (TV) as illustrated in FIG. 1, but there is no limitation thereto, and thus may be realized as one of various types of apparatuses having displaying functions such as a Personal Computer (PC), a navigation display, a Kiosk, a Digital Information Display (DID), and the like. The display apparatus 200 may operate in an interlocked manner with the user terminal apparatus 100. For example, the display apparatus 200 may receive a certain content or a control command from the user terminal apparatus 100. The display apparatus 200 may transmit a content currently being displayed to the user terminal apparatus 100 in a streaming format, and provide a mirroring function such that the content is displayed on the user terminal apparatus 100 simultaneously.

Furthermore, in the case where the user terminal apparatus 100 is changed to a predetermined arrangement state, the display apparatus 200 may receive information on the arrangement state, and may transmit information related to the content displayed on a screen to the user terminal apparatus based on the received information.

Hereinafter, the user terminal apparatus 100 will be described as a smart phone. However, this is only an example, and the user terminal apparatus 100 may of course be realized as one of various kinds of devices, such as a personal media player (PMP), a tablet, a PC, and an electronic dictionary, that are capable of processing images.

The user terminal apparatus 100 may receive information related to the content currently being displayed from the display apparatus 200. In the case where the user terminal apparatus 100 determines its arrangement state and make changes based on a predetermined arrangement state, the user terminal apparatus 100 may transmit information on the arrangement state to the display apparatus 200. Then, the user terminal apparatus 100 may receive information related to the content currently being displayed form the display apparatus 200, divide a screen of a display into a plurality of display regions, i.e., screen regions or screens, and display the received information on at least one of the plurality of display regions. Hereinafter, various exemplary embodiments will be described with reference to a block diagram illustrating an exemplary configuration of the user terminal apparatus 100.

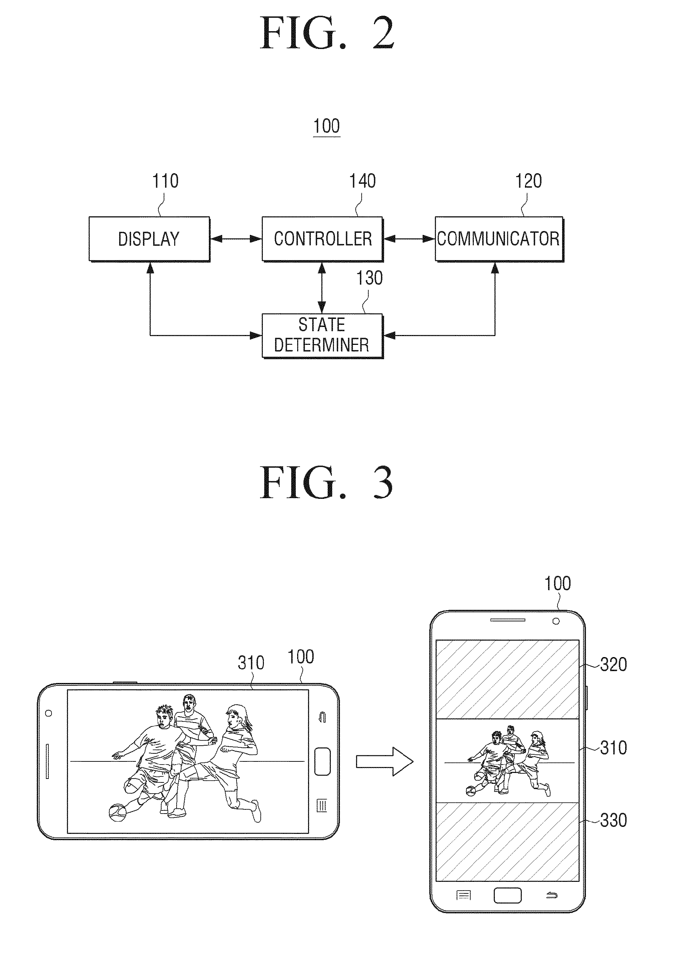

FIG. 2 is a block diagram of the user terminal apparatus according to an exemplary embodiment.

Referring to FIG. 2, the user terminal apparatus 100 includes a display 110, communicator 120, i.e., a transceiver, state determiner 130, and controller 140.

The display 110 outputs an image content received from an external source or stored in the terminal apparatus 100 under the control of the controller 140. Furthermore, the display 110 may change a direction of the content being displayed from a landscape screen state, i.e., a width screen state or a horizontal screen state, to a portrait screen state, i.e., a vertical screen state or a length screen state, or change it from the portrait screen state to the landscape screen state by a control of the controller 140.

The communicator 120 is configured to communicate with various types of external devices or external servers according to various types of communication methods. The communicator 120 communicates with the display apparatus 200, and receives the content currently being displayed on the display apparatus 200, so that the content currently being displayed on the display apparatus 200 can be mirrored in the user terminal apparatus 100. The communicator 120 may receive the content from the display apparatus 200 or from another source, for example, a server or a broadcast station. The communicator 120 may receive the content in a streaming format. Furthermore, the communicator 120 may transmit information on an arrangement state of the user terminal apparatus 100 to the display apparatus 200, and receive information related to the content currently being displayed from the display apparatus 200.

The state determiner 130 determines an arrangement state of the user terminal apparatus 100 and determines whether or not to make a change to a predetermined arrangement state. Herein, the state determiner 130 may determine the arrangement state using at least one of an acceleration sensor, gyro sensor, and touch sensor. The state determiner 130 may be implemented as hardware, software, or a combination of hardware and software.

The controller 140 serves a function of controlling an overall operation of the user terminal apparatus 100.

When the user terminal apparatus 100 is changed to a predetermined arrangement state, the controller 140 may control information on the arrangement state to be transmitted to the display apparatus 200 through the communicator 120. Herein, in the case where the user terminal apparatus 100 is changed from a landscape screen state to a portrait screen state, the controller 140 may control the information on the changed arrangement state to be transmitted to the display apparatus 200.

Furthermore, the controller 140 may control information related to the content currently being displayed on the display apparatus 200 to be received from the display apparatus 200. Then, the controller 140 may divide the screen of the display 110 into a plurality of display regions, i.e., screen regions or screens, based on the received information, and control the received information to be displayed on at least one of the plurality of display regions.

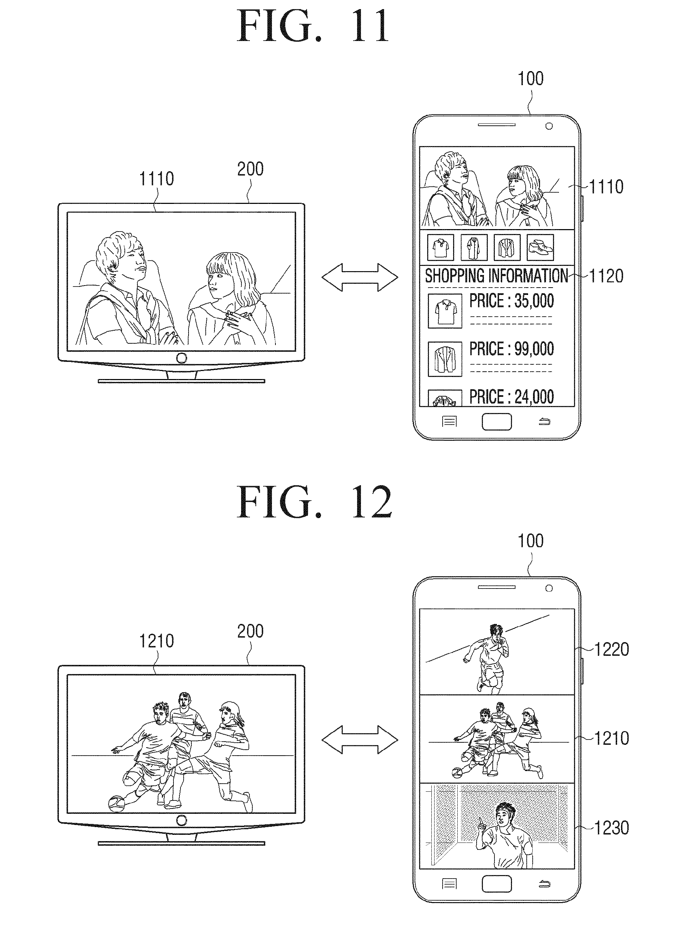

The information related to the content currently being displayed may include at least one of an image content of a channel surrounding a channel of the content currently being displayed on the display apparatus 200, an image of content of a same genre as the content currently being displayed on the display apparatus 200, additional information content related to the content currently being displayed on the display apparatus 200, and a multi-view image content of the content currently being displayed on the display apparatus 200. A method for displaying the information related to the content received in a plurality of screens will be explained in greater detail with reference to FIGs. 11 to 14.

Furthermore, when an event occurs where one of the plurality of screens that display the information related to the content currently being displayed on the display apparatus 200 is selected, the controller may control the selected information to be displayed on the display apparatus 200. That is, the controller 140 may control the communicator 120 to transmit information that one of the plurality of screens to the display apparatus 200, and the display apparatus 200 may perceive this as a command to display the selected information on a display of the display apparatus. Accordingly, the content currently being displayed on the display apparatus 200 may be changed to the selected related information.

For example, in the case where the image content of a surrounding channel of the content currently being displayed on the display apparatus 200 is displayed on the plurality of screens of the user terminal apparatus 100, the user may select a lower channel or a higher channel through an operation such as a touch. Accordingly, the display apparatus 200 may change the channel being displayed to the selected lower channel or higher channel. In this case, the channel configuration of the plurality of screens of the user terminal apparatus 100 may be changed. That is, the user terminal apparatus 100 may serve as a remote control apparatus for controlling the display apparatus 200 remotely.

Herein, an event where one of the plurality of screens is selected may be one of various touch inputs such as a click or tap, a double tap, a tap and hold, and the like. When the input is received, the user terminal apparatus may display a confirmation message asking whether or not to change the content currently being displayed on the display apparatus 200 to the selected content. Although a touch input is described, this is only an example, and the operation may be, as non-limiting examples, a voice command or a preset timing period expiring.

Furthermore, when the user terminal apparatus 100 is not in the predetermined arrangement state, the controller 140 may display a screen that the user previously selected from the original screen or a plurality of screens as a whole screen.

Further, the user terminal apparatus 100 may be realized to automatically convert an OFF state into an ON state, or quickly display a content from a waiting mode as soon as there is a request from the user.

By the various aforementioned exemplary embodiments, the user may be provided with not only existing content displayed but also information related to the content and other content together through the display.

FIG. 3 is a view for explaining a region where related information is to be displayed according to an exemplary embodiment.

Referring to FIG. 3, the user terminal apparatus 100 has a rectangular shape wherein its width is greater than its height, similar to an orientation of a general display apparatus 200 in order to display the content 310 optimally. When the arrangement of the user terminal apparatus 100 is changed to a portrait screen, the height of the screen is greater than its width, and the direction, size, and ratio of the content 310 being displayed may be changed as well. Accordingly, on the screen being displayed, empty regions 320, 330 are created where the content is not displayed. Therefore, the controller 140 may control the information related to the content 310 being displayed to be displayed on the empty region.

Although three screens are illustrated on the display 110 of the user terminal apparatus 100 in FIG. 2, this is merely an example, and the number of screens may be two or more than four screens according to various exemplary embodiments.

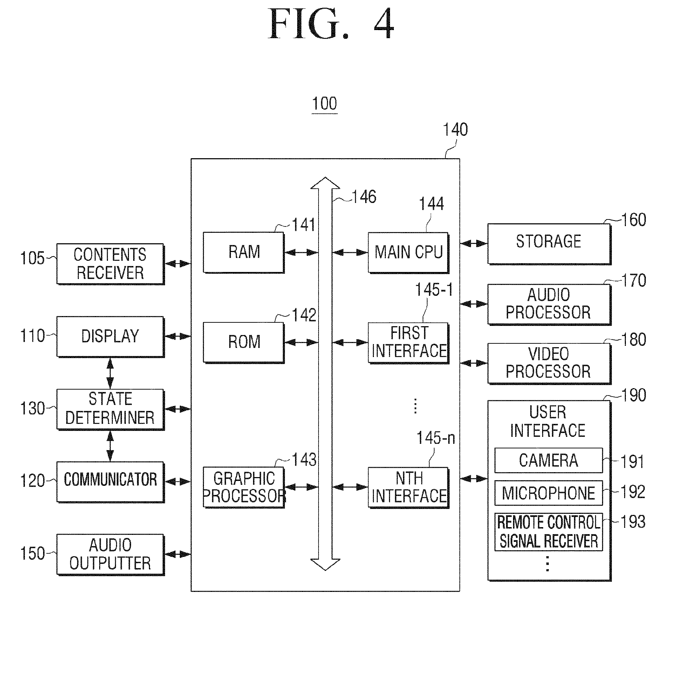

FIG. 4 is a block diagram of the user terminal apparatus according to an exemplary embodiment. As illustrated in FIG. 4, the user terminal apparatus 100 includes a content receiver 105, i.e., a receiver or a transceiver, a display 110, a communicator 120, i.e., a transceiver, a state determiner 130, a controller 140, an audio outputter 150, a storage 160, i.e., a memory, an audio processor 170, a video processor 180, and a user interface (UI) 190. Detailed explanations of elements described with reference to FIG. 2 may be omitted.

The content receiver 105 receives content from various sources. For example, the content receiver 105 may receive a broadcast content from an external broadcasting station, or may receive content from an external apparatus (for example, a DVD player, a BD player, etc.), or receive content stored in the storage 250. The content receiver 105 may be provided with a plurality of content receiving modules in order to display a plurality of screens on one display screen. For example, in order to display a plurality of broadcast channels at the same time, the content receiver 105 may be provided with a plurality of tuners. Furthermore, the content receiver 105 may receive the content being displayed in the display apparatus in a streaming format and perform a mirroring function of displaying the content in real time.

The display 110 displays a video frame that the video processor 170 processed from the content data received in the content receiver 105 and at least one of the various screens generated in the graphic processor 123. The display 110 may change the direction of the content being displayed from a landscape screen state to a portrait screen state by the control of the controller 140. Herein, when changing the direction of the content being displayed from a landscape screen state to a portrait screen state, the display 110 may divide the display screen into a plurality of display regions, i.e., screen regions or screens, and display information related to the received content on the plurality of display regions.

Meanwhile, the display 110 may, without limitation, be realized as a Liquid Crystal Display (LCD) Panel or an Organic Light Emitting Diodes (OLED) display. The display 110 may be realized as a flexible display, a transparent display, and the like depending on various exemplary embodiments.

The communicator 120 is configured to communicate with various types of external device or external server including the display apparatus 200 according to various types of communication methods. The communicator 120 may include various chips, such as a Wireless Fidelity (Wi-Fi) chip, a Bluetooth chip, a near field communication (NFC) chip, a wireless communication chip, and the like. Herein, each of the Wi-Fi chip, Bluetooth chip, and NFC chip performs communication in a Wi-Fi method, Bluetooth method, and NFC method, respectively. Of these, the NFC chip refers to a chip that operates in the NFC method that uses 13.56 MHz bandwidth of the various RF-ID frequency bandwidths including 135 kHz, 13.56 MHz, 433 MHz, 860∼960 MHz, and 2.45 GHz.

In the case of using the Wi-Fi chip or Bluetooth chip, it is possible to transceive, i.e., transmit and receive, various connection related information such as an service set identifier (SSID), a session key, and the like, and use this information to make a communication connection and then transceive various information.

The wireless communication chip refers to a chip that performs communication according to various communication standards such as IEEE, Zigbee, 3G (3rd Generation), 3GPP (3rd Generation Partnership Project), and LTE (Long Term Evolution).

The communicator 120 may communicate with the display apparatus 200 and transmit information on the arrangement state of the user terminal apparatus 100 to the display apparatus 200. Furthermore, the communicator 120 may receive information related to the content being displayed in the display 200 from the display apparatus 200 or an external server.

The controller 140 uses various programs stored in the storage 160 to control an overall operation of the user terminal apparatus 100.

The controller 140 includes a random access memory (RAM) 141, read-only memory (ROM) 142, graphic processor 143, main central processing unit (CPU) 144, first to nth interfaces 145-1 ∼ 145-n, and bus 146. Herein, the RAM 141, ROM 142, graphic processor 143, main CPU 144, and first to nth interfaces 145-1 ∼ 145-n may be connected to one another through the bus 146.

In the ROM 142, a command set for booting the system is stored. The main CPU 144 copies various application programs stored in the storage 160 to the RAM 141, and executes the application programs copied in the RAM 141 to perform various operations.

The graphic processor 143 generates a screen that includes various objects such as an icon, image, text, and the like using an arithmetic section, i.e., a calculator or an arithmetic unit, and rendering unit, i.e., a renderer. The arithmetic section calculates attribute values such as coordinates, formats, sizes, colors, and the like. The rendering unit generates a screen of one of various layouts including objects based on the attribute values calculated by the arithmetic section.

The main CPU 144 accesses the storage 160, and performs booting using the operating system (O/S) stored in the storage 160. Furthermore, the main CPU 144 performs various operations using various programs, content, data, and the like stored in the storage 160.

The first to nth interfaces 145-1 to 145-n are connected to the various aforementioned components. One of the interfaces may be a network interface being connected to the external device through one network.

The audio outputter 150 is configured to output various audio data processed in the audio processor 170, alarm sounds, or voice messages. The audio processor 170 may be realized as a speaker, but this is only an example, and thus it may be realized as another type of audio outputter such as an audio outputting terminal. Especially, in the case where the arrangement state of the display 110 is changed to a length direction arrangement state, the audio outputter 150 may output an audio of the content being played on one of the plurality of screens. The content to be output by the audio outputter outputs may be selected or set by the user. Furthermore, the audio outputter 150 may transmit an audio of a content being played on another screen of the plurality of screens to the external device through the network.

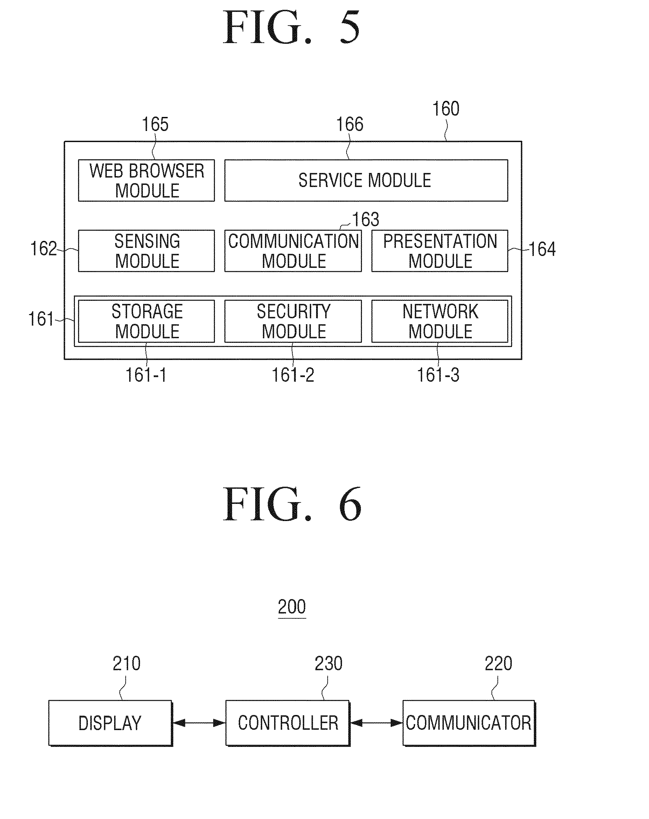

The storage 160 stores various modules for driving the display apparatus 200. An exemplary configuration of the storage 160 will be described with reference to FIG. 5.

FIG. 5 is a block diagram illustrating of the storage according to an exemplary embodiment.

Referring to FIG. 5, the storage 160 may store software that includes a base module 161, a sensing module 162, a communication module 163, a presentation module 164, a web browser module 165, and a service module 166.

The base module 161 refers to a base module configured to process a signal transmitted from various hardware included in the user terminal apparatus 100 and to transmit the processed signal to a higher layer module. The base module 161 includes a storage module 161-1, a security module 161-2, a network module 161-3, and the like. The storage module 161-1 is a program module configured to manage a database (DB) or registry. The security module 161-2 refers to a program module for certification, permission, and secure storage for the hardware. The network module 161-3 is a module for supporting network connection and includes a DNET module, a universal plug-and-play (UPnP) module, and the like.

The sensing module 162 is a module configured to collect information from various sensors, and to analyze and manage the collected information.

The communication module 163 is a module for performing communication with an external device. The communication module 163 may include a messaging module and a telephone module.

The presentation module 134 is a module for configuring a display screen. The presentation module 134 includes a multimedia module for playing and outputting multimedia content, and a UI rendering module configured to perform graphic processing.

The web browser module 165 refers to a module for performing web browsing and accessing the web server. The web browser module 165 may include various modules such as a web view module for configuring a web page, a download agent module for performing downloading, a bookmark module, a web kit module, and the like.

The service module 166 is a module that includes various applications for providing various services. Specifically, the service module 166 may include various program modules such as a social network service (SNS) program, content playing program, game program, e-book program, calendar program, alarm management program, and other widget and the like.

Referring to FIG. 4 again, the audio processor 170 is a component for processing audio data. The audio processor 170 may perform various processing such as decoding audio data, amplification, noise filtering, and the like. Meanwhile, the audio processor 170 may be provided with a plurality of audio processing modules for processing audio corresponding to a plurality of content.

The video processor 180 is a component for processing the content received in the content receiver 105. The video processor 180 may perform various image processing such as decoding, scaling, noise filtering, frame rate conversion, and resolution conversion on the content. Meanwhile, the video processor 180 may be provided with a plurality of video processing modules for processing video corresponding to the plurality of content.

The user interface 190 is a component for sensing user interaction for controlling an overall operation of the user terminal apparatus 100. The user interface 190 may include various interface sensing apparatuses such as a camera 191, a microphone 192, and a remote control signal receiver 193 as illustrated in FIG. 4.

When there is a microphone 192, the controller 140 may perform a control operation by a user's voice being input through the microphone 192. For example, one of a plurality of screens that display information related to the content currently being displayed on the display apparatus 200 may be selected by a user voice recognition event. That is, as the user speaks, a lower channel or higher channel may be selected. Accordingly, the display apparatus 200 may change the channel being displayed to the selected lower channel or higher channel.

FIG. 6 is a block diagram schematically illustrating a configuration of a display apparatus according to an exemplary embodiment.

Referring to FIG. 6, the display apparatus 200 includes a display 210, a communicator 220, i.e., a transceiver, and a controller 230. The configuration of the display apparatus 200 may be similar to that of the user terminal apparatus 100 illustrated in FIG. 2, and thus repeated derailed explanation may be omitted.

The display 210 outputs an image content stored or received from an external source according to a control of the controller 230.

The communicator 220 may communicate with the user terminal apparatus 100, and transmit the image content currently being output on the display 210 to the user terminal apparatus 100. Furthermore, the communicator 220 may receive information on the arrangement state from the user terminal apparatus 100, and transmit information related to the content currently being displayed.

The controller 230 serves a function of controlling an overall operation of the display apparatus 200.

When information on the arrangement state of the user terminal apparatus 100 is received, the controller 230 may control the communicator 220 to transmit information related to the content currently being displayed on the screen based on the received information.

Furthermore, when an event where one of the information related to the content being displayed is selected occurs in the user terminal apparatus 100, the controller 230 may control the display 210 to display the selected information on a whole screen of the display 210.

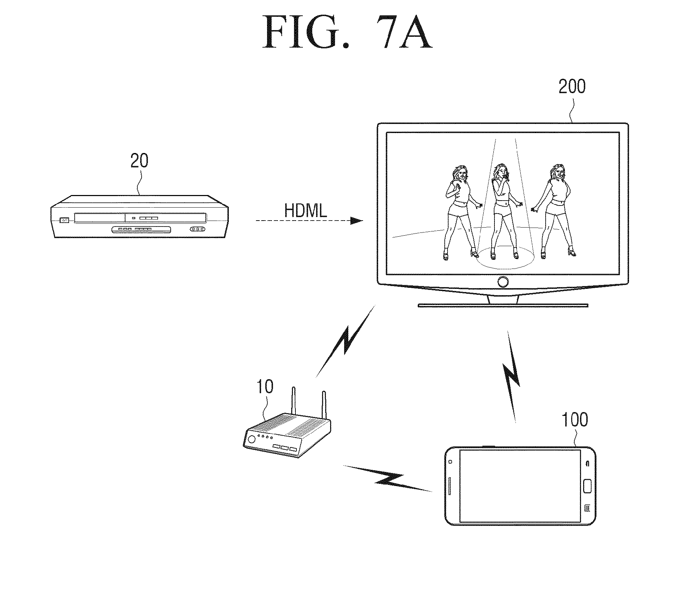

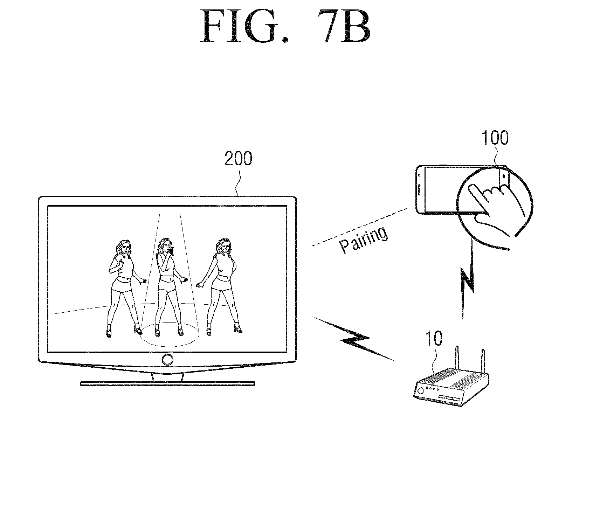

FIGs. 7A and 7B are views for explaining a method for pairing a display apparatus and user terminal apparatus according to an exemplary embodiment.

As illustrated in FIG. 7A, the display apparatus 200 and user terminal apparatus 100 may be connected to perform wireless communication through an Access Point (AP) apparatus 10. As a non-limiting example, the AP apparatus 10 may be realized as a wireless sharing unit configured to transmit a Wi-Fi signal. In some cases, the display apparatus 200 and user terminal apparatus 100 may be connected to each other through Wi-Fi Direct. Wi-Fi Direct is a Wi-Fi technology based on a peer-to peer (P2P) concept wherein a Wi-Fi terminal may be directly connected without a wireless sharing unit.

A set top box (STB) 20 having home communication terminal functions necessary for using a next generation bilateral multimedia communication service (so called dialogue type television) such as video on-demand (VOD) content, image version home shopping, network games, and the like may be connected to the display apparatus 200. The STB 20 is an apparatus that provides additional functionality to a TV, such as providing an internet user interface. The STB 20 may be a special computer that may transceive data through the internet. It has a web browser and protocols such as TCP/IP. A STB 20 may provide services through a telephone circuit line or cable TV circuit line to provide web TV services, and may be provided with a basic function of receiving and converting an image signal.

A user interruption may be minimized and a pairing may be performed as illustrated in FIG. 7B. For example, a pairing may be performed with only a Power On. That is, when the display apparatus 200 is powered on, and then the user terminal apparatus 100 is powered on, the user terminal apparatus 100 obtains network (N/W) information without additional user operations, and then connects to the N/W. Furthermore, devices that are paired once need not be paired again.

However, the aforementioned communication method is merely an example, and the user terminal apparatus 100 and display apparatus 200 may perform communication in various communication methods.

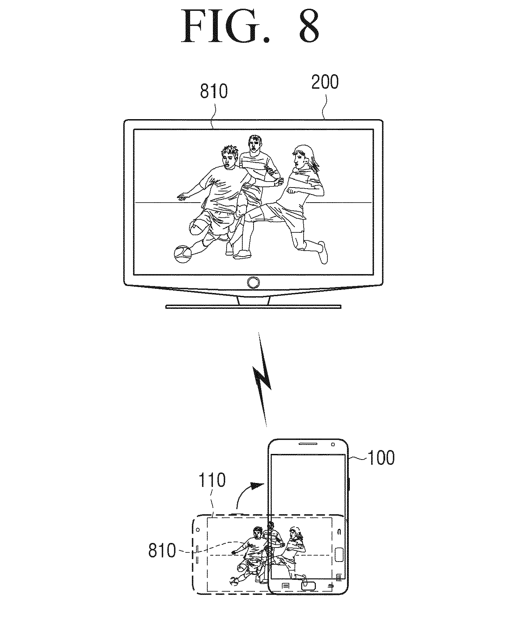

FIG. 8 is a view for explaining a method for determining an arrangement state of a user terminal apparatus according to an exemplary embodiment.

Referring to FIG. 8, when the user terminal apparatus 100 is at a landscape screen state, it may be a state where a content 810 displayed on the display apparatus 200 is being mirrored and provided on the display 110 of the user terminal apparatus. Herein, when the arrangement state of the user terminal apparatus 100 is changed to a predetermined arrangement state, such as a portrait screen state, the user terminal apparatus 100 may transmit information on the changed arrangement state to the display apparatus 200 through the communicator 120.

Hereinafter, a case where information on a changed arrangement state is transmitted to the display apparatus when the user terminal apparatus 100 is changed from a landscape screen state to a portrait screen state will be described. However, this is merely an example, and the predetermined arrangement state may be any one of various arrangement states other than the portrait screen state.

In this case, whether or not the user terminal apparatus 100 has changed from a landscape screen state to a portrait screen state is determined by the state determiner 130. The state determiner 130 may determine an arrangement state using at least one of an acceleration sensor, gyro sensor, and touch sensor. For example, the state determiner 130 may identify the touch distribution of the display 110 through the touch sensor, analyze regions having relatively more touch distribution and regions having relatively less touch distribution, and determine the arrangement state of the user terminal apparatus 100. Accordingly, the state determiner 130 may determine various arrangement states of the user terminal apparatus 100. When the user terminal apparatus 100 is changed to a portrait screen state, the controller 140 may control such that information on the changed arrangement state is transmitted to the display apparatus 200.

When the display apparatus 200 receives information on the changed arrangement state, it transmits information related to the content 810 currently being displayed to the user terminal apparatus 100. The user terminal apparatus 100 may receive information on the content 810 being displayed on the display 110, that is information related to the content 810 being displayed on the display apparatus 200, divide the screen of the display 110 into a plurality of display regions, i.e., screen regions or screens, and display the received information on one of the plurality of display regions. The user terminal apparatus 100 may further include a content receiver 105 configured to receive related information.

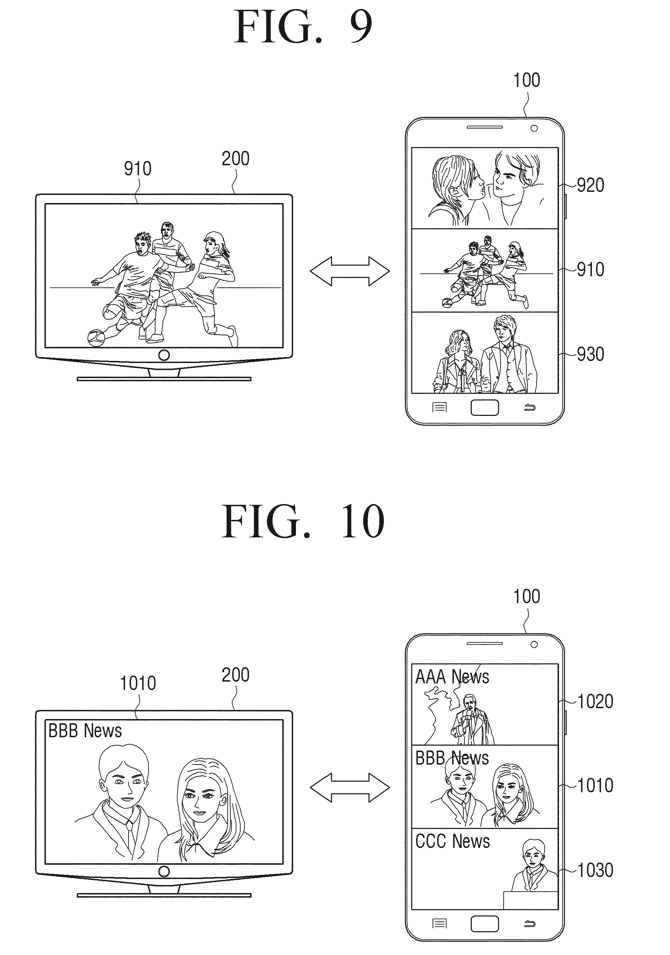

Herein, the information related to the content currently being displayed may include at least one of an image content of a lower and higher channel of a channel of the content currently being displayed on the display apparatus 200, an image content of a same genre as the content currently being displayed on the display apparatus 200, additional information content related to the content currently being displayed on the display apparatus 200, and a multi-view image content of the content currently being displayed on the display apparatus 200. A method for displaying the information related to the content received in a plurality of screens will be explained in greater detail with reference to FIGs. 9 to 12.

FIGs. 9 to 12 are views for explaining information related to a content being displayed, according to various exemplary embodiments.

Referring to FIG. 9, a method for displaying image content of channels surrounding a channel of the content currently being displayed on the display apparatus 200 will be explained. As illustrated in FIG. 9, while an image 910 is being displayed on the display apparatus 200, the same image 910 may be mirrored and displayed on the screen of the display 110 of the user terminal apparatus 100. Herein, when the screen arrangement of the user terminal apparatus 100 is changed to a portrait screen state, the original image 910 may be mirrored and displayed on one of the plurality of screens provided in the display 110, and information related to the image 910 may be displayed on the rest of the screens. For example, the original image 910 may be displayed on the screen in the center of the plurality of screens, and images 920, 930 corresponding to content of surrounding channels may be displayed on the rest of the screens. For example, if the channel of the original image 910 is channel 10, the surrounding channels may be channels 9 and 11.

Although three screens are described with reference to FIG. 9, this is merely an example, and the number of screens may be two or more screens.

Referring to FIG. 10, a method for displaying an image content of a same genre as the content being displayed on the display apparatus 200 will be explained. As illustrated in FIG. 10, there may be a case where a news channel is being displayed in the display apparatus 200 and the arrangement state of the user terminal apparatus 100 is changed to a portrait screen state. In this case, the original channel image 1010 may be displayed on the screen located in the center of the plurality of screens, while other news channel images 1020, 1030 of a same genre are displayed on the rest of the screens. Herein, the related news channel images may be predetermined by the user, or be determined based on stored user information, a user profile, and the like. For example, the news channels frequently viewed by the user may be provided as related information.

Although the genre of the content is news in Figure 10, this is merely an example, and it is to be understood that the genre of the content may be, as non-limiting examples, drama, movie, music, or other various genres.

Referring to FIG. 11, a method for displaying additional information content related to the content being displayed on the display apparatus 200 will be explained. As illustrated in FIG. 11, a screen of the display 110 may be divided into two screen regions wherein an original image 1110 is displayed on the top screen of the divided two screen regions, while an image 1120 on shopping information on products that appear in the image 1110 (clothes or things belonging to characters of a drama) is displayed on the lower screen region. The shopping information image may be determined based on the stored user information, a user profile, etc., and may be an image including various information on the products and also information on product purchase sites. For example, in the case where the user is a woman in her 20s, information on bags displayed on the original image 1110 may be provided.

Although shopping information is described as the additional information content with reference to FIG. 11, this is only an example, and various information may be included in the additional information content. For example, in the case where the displayed content is news, internet articles may be provided as related additional information content, and in the case where the displayed content is a drama, the storyline of the drama may be provided as related additional information content.

Referring to FIG. 12, a method for displaying a multi-view image content of a content currently being displayed on the display apparatus 200 will be explained hereinafter. As illustrated in FIG. 12, the arrangement state of the user terminal apparatus 100 is changed to a portrait screen state while a sports image content 1210 is being displayed in the display apparatus 200. In this case, if the content 1210 provides a multi-view image, the original sports image 1210 may be displayed on the screen in the center of the plurality of screens generated in the user terminal apparatus 100, while multi-view images 1220, 1230 of the same sports game taken at various angles by numerous cameras are displayed on additional screens. This allows the user to view the sports image in various angles at the same time, thereby increasing a user's viewing experience of the game.

As aforementioned, the user terminal apparatus 100 may display the content currently being displayed on the display apparatus 200 and the information related to the content at the same time. However, this is a merely an example. That is, the user terminal apparatus 100 may display various information related to the content being displayed in various methods using an empty region of the user terminal apparatus 100. Furthermore, a kind of information to receive, for example, whether to receive a lower channel content or another content of a same genre, and so forth, may be determined by the user.

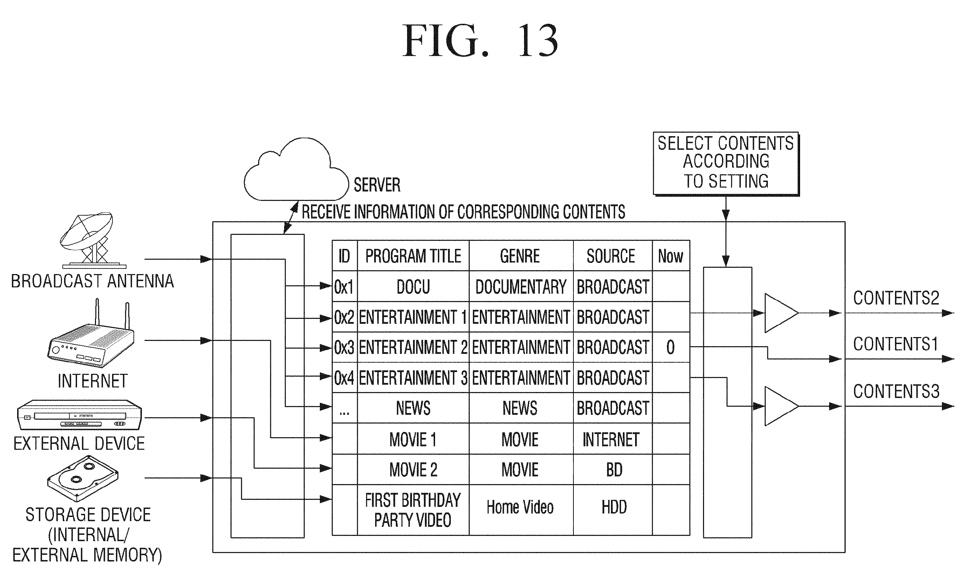

FIG. 13 is a view for explaining a process of receiving related information classified by content genre and source.

The user terminal apparatus 100 may receive a content from the display apparatus 200 through the content receiver 105 in a streaming format, but it may also have a plurality of tuners and receive the content being displayed on the display apparatus 20 through a broadcast antennae. Furthermore, the user terminal apparatus 100 may receive content through the internet, external devices, or storage devices.

Referring to FIG. 13, the user terminal apparatus 100 may use a look up table stored in the storage 160 to classify the input content by content genre and source in real time. The user terminal apparatus 100 may search for information related to the content being displayed through the preclassified table. In the case where the related information is a multi-view content, a content of each point of view may operate as a separate content, but each of the multi-view content may form one group and be provided through the plurality of screens of the user terminal apparatus 100.

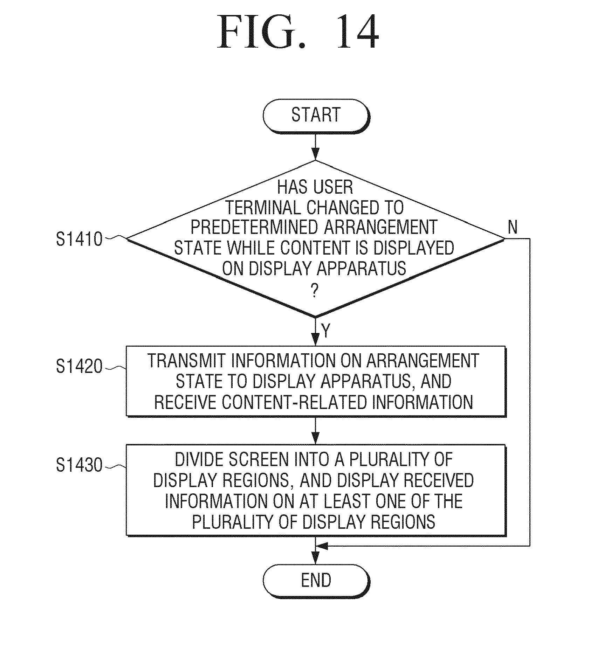

FIG. 14 is a flowchart for explaining a method for controlling a user terminal apparatus according to an exemplary embodiment.

First, while a content is being displayed on the display apparatus 200, it is determined whether or not the user terminal apparatus 100 is changed to a predetermined arrangement state (S1410). In the case where the user terminal apparatus 100 is at a landscape screen state, it may be at a state of receiving a content displayed on the display apparatus 200 in a streaming format and mirroring the content in real time. Herein, determining whether or not the arrangement state is changed to a predetermined arrangement state may include determining whether the user terminal apparatus changed from a landscape screen state to a portrait screen state. In response to the arrangement state being determined to have changed to a predetermined arrangement state (S1410:Y), information on the arrangement state is transmitted to the display apparatus 200, and information related to the content being displayed is received from the display apparatus (S1420). In response to being determined that the arrangement state is not changed to a predetermined arrangement state (S1410:N), the information on the arrangement state is not transmitted.

Herein, the content related information received from the display apparatus 200 may include at least one of an image content of a surrounding channel of a channel of the content currently being displayed on the display apparatus 200, an image content of a same genre as the content currently being displayed on the display apparatus 200, additional information content related to the content currently being displayed on the display apparatus 200, and a multi-view image content of the content currently being displayed on the display apparatus 200. Herein, the information related to the content being displayed may be received based on the information classified by the content genre and source may be stored or received from an external server.

At S1430, a screen is divided into a plurality of display regions, i.e., screen regions or screens, received information is displayed on at least one of the plurality of display regions. Herein, in response to an event where one of the information related to the content being displayed is selected, the selected information may be displayed on the whole screen of the display apparatus 200. However, when the user terminal apparatus 100 is changed from the predetermined arrangement state, for example, when the arrangement state changed from a portrait screen state to a landscape screen state, the selected screen of the plurality of screens may be displayed as the whole screen of the user terminal apparatus 100.

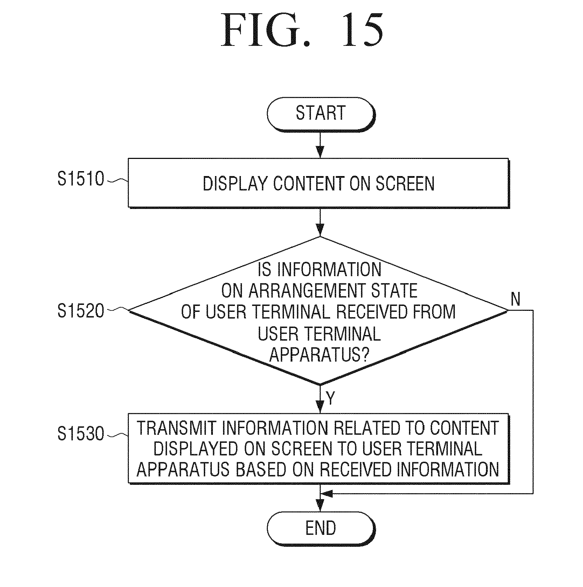

FIG. 15 is a flowchart for explaining a method for controlling a display apparatus according to an embodiment.

A content is displayed on a screen (S1510). Content to be displayed on the user terminal apparatus 100 may be transmitted to the user terminal apparatus 100. Alternatively, only information on what content is currently being displayed may be transmitted.

Then, at S1520, in response to receiving information on an arrangement state of the user terminal apparatus 100 from the user terminal apparatus 100 (S1520:Y), information related to the content being displayed on the screen is transmitted to the user terminal apparatus 100 based on the received information (S1530). The information on the arrangement state may include information that the user terminal apparatus 100 changed from a landscape screen state to a portrait screen state. If no information on the arrangement state received (S1520:N), the information related to the content displayed on the screen is not transmitted to the user terminal apparatus 100 is not proceeded.

The user terminal apparatus and method for controlling the display apparatus according to the aforementioned exemplary embodiments may be realized in a program and be provided inside a user terminal apparatus or display apparatus.

For example, there may be provided a non-transitory computer readable medium that stores a program configured to instruct a processor to perform determining an arrangement state of the user terminal apparatus; transmitting the information on the arrangement state to the display apparatus; receiving information related to the content in response to the user terminal apparatus being changed to a predetermined arrangement state; dividing a screen into a plurality of display regions; and displaying the received information on at least one of the display regions.

A non-transitory computer readable medium refers to a computer readable medium configured to stored data semi-permanently and not for a short period of time such as a register, cache, and memory. For example, the aforementioned applications and programs may be stored in a non-transitory computer readable medium, such as a compact disc (CD), a digital versatile disc (DVD), a hard disk, a Blu-ray disk, a universal serial bus (USB) drive, a memory card, ROM, and so forth.

Although a few exemplary embodiments have been shown and described, it would be appreciated by those skilled in the art that changes may be made to these exemplary embodiments without departing from the principles of the invention, the scope of which is defined in the claims.

## Claims

1. A user terminal apparatus comprising:
a display;
a communicator configured to communicate with a display apparatus;
a state determiner configured to determine an arrangement state of the user terminal apparatus; and
a controller configured to control, in response to the user terminal apparatus being changed to a predetermined arrangement state, the communicator to transmit information on the arrangement state to the display apparatus and receive information related to content currently displayed on the display apparatus, to divide a screen of the display into a plurality of display regions, and to control the display to display the received information on at least one of the plurality of display regions.

2. The user terminal apparatus according to claim 1, wherein the controller is further configured to, in response to the user terminal apparatus being changed from a landscape screen state to a portrait screen state, control the communicator to transmit the information on the arrangement state to the display apparatus.

3. The user terminal apparatus according to claim 1 or 2, wherein the controller is further configured to, in response to the user terminal apparatus being changed to a predetermined arrangement state while the content currently displayed on the display apparatus is being mirrored on the display, control the communicator to transmit the information on the arrangement state to the display apparatus.

4. The user terminal apparatus according to claim 1, 2 or 3, wherein the information related to the content received from the display apparatus comprises at least one of image content of a channel surrounding a channel of the content currently displayed on the display apparatus, image content of content having a same genre as the content currently displayed on the display apparatus, additional information content related to the content currently displayed on the display apparatus, and multi-view image content of the content currently displayed on the display apparatus.

5. The user terminal apparatus according to any one of the preceding claims, wherein the controller is further configured to, in response to one of the plurality of display regions displaying the received information being selected, control the display to display the selected information on an entire screen of the display.

6. The user terminal apparatus according to any one of the preceding claims, wherein the state determiner is further configured to determine the arrangement state using at least one of an acceleration sensor, a gyro sensor, and a touch sensor.

7. The user terminal apparatus according to any one of the preceding claims, further comprising a content receiver,
wherein the controller is further configured to control the content receiver to, in response to the user terminal apparatus being changed from a landscape screen state to a portrait screen state while the user terminal apparatus is mirroring the display apparatus, receive the information related to the content displayed on the display, divide the screen of the display into the plurality of display regions, and control the display to display the received information on at least one of the plurality of display regions.

8. The user terminal apparatus according to any one of the preceding claims, wherein the controller is further configured to control the communicator to receive the information related to the content based on information classified by content genre and source stored in the user terminal apparatus or received from an external server.

9. A display apparatus comprising:
a display configured to display a content on a screen;
a communicator configured to communicate with a user terminal apparatus; and
a controller configured to, in response to receiving information on an arrangement state of the user terminal apparatus, control the communicator to transmit information related to the content currently displayed on the screen to the user terminal apparatus based on the received information.

10. The display apparatus according to claim 9, wherein the information on the arrangement state comprises information indicating that the user terminal apparatus has changed from a landscape screen state to a portrait screen state.

11. The display apparatus according to claim 9 or 10, wherein the information related to the content currently displayed comprises at least one of image content of a channel surrounding a channel of the content currently displayed on the screen, image content of content having a same genre as the content currently displayed on the screen, additional information content related to the content currently displayed on the screen, and multi-view image content of the content currently displayed on the screen.

12. A system comprising:
a display apparatus; and
a user terminal apparatus configured to determine an arrangement state of the user terminal apparatus, and, in response to the user terminal apparatus being changed to a predetermined arrangement state, to transmit information on the arrangement state to the display apparatus,
wherein the display apparatus is configured to display a content on a screen, and, in response to receiving information on the arrangement state of the user terminal apparatus, to transmit information related to content currently displayed on the screen to the user terminal apparatus based on the received information, and
wherein the user terminal apparatus is further configured to, in response to receiving the information related to the content, divide the screen into a plurality of display regions, and display the received information on at least one of the plurality of display regions.

13. A method for controlling a user terminal apparatus, the method comprising:
determining an arrangement state of the user terminal apparatus; transmitting, in response to determining that the arrangement state of the user terminal apparatus has changed to a predetermined arrangement state, information on the arrangement state to a display apparatus;
receiving information related to content currently displayed on the display apparatus;
dividing a screen of the terminal apparatus into a plurality of display regions; and
displaying the received information on at least one of the plurality of display regions.

14. A method for controlling a display apparatus, the method comprising:
displaying a content on a screen of the display apparatus;
receiving information on an arrangement state of the user terminal apparatus from a user terminal apparatus; and
transmitting, in response to receiving the information on the arrangement state, information related to content currently displayed on the screen to the user terminal apparatus based on the received information.

15. A user terminal apparatus comprising:
a display comprising a screen;
a transceiver configured to transmit information to and receive information from a display apparatus;
a sensor configured to sense orientation information; and
a controller configured to determine an arrangement state of the user terminal apparatus based on sensed orientation information, control the transceiver to, in response to determining that the arrangement state of the user terminal apparatus has changed to a predetermined arrangement state, transmit information on the arrangement state to a display apparatus, divide, in response to the transceiver receiving information related to content currently displayed on the display apparatus, the screen into a plurality of display regions, and control the display to display images corresponding to the received information on at least one of the plurality of display regions.
